# EUROPÄISCHE PATENTANMELDUNG

(11) **EP 0 849 895 A2**
(43) Veröffentlichungstag der Anmeldung: **24.06.1998**
(21) Anmeldenummer: 97121309.5
(22) Anmeldetag: 04.12.1997
(51) Int. Cl.: H04B 10/10

(54) **Einrichtung zum kabellosen optischen Übertragen von Video-und/oder Audioinformationen**

(30) Priorität: 20.12.1996 DE 19653582
(71) Anmelder: NOKIA TECHNOLOGY GmbH, 75175 Pforzheim (DE)
(72) Erfinder: Reime, Gerd, 75328 Schömberg (DE)

(57) **Zusammenfassung**

Die Erfindung betrifft eine Einrichtung zum kabellosen optischen Übertragen von Video- und/oder Audioinformation, wie Fernsehsendungen oder Videoaufzeichnungen mit IR-Strahlung, das ein optischer Sender frei in den umgebenden Raum strahlt und ein oder mehrere Fotoempfänger empfangen. Es ist Aufgabe der Erfindung, Mittel zum Erweitern des Übertragungsbereichs von kabellosen optischen Übertragungseinrichtungen und zum Vereinfachen der Signalaufbereitung aufzuzeigen, um auch Fernsehsendungen oder Videoaufzeichnungen mit geringem zusätzlichen Schaltungsaufwand zum Anpassen an den optischen Übertragungskanal und mit wenigen Lumineszenzdioden zuverlässig bei dem in üblichen Wohnräumen vorhandenen Umgebungslicht übertragen zu können. Dieses wird dadurch gelöst, daß der optischen Übertragung zumindest für das obere Frequenzspektrum der Video- und/oder Audioinformation ein impulsförmiges Quellensignal zugrunde liegt, bei dem die zeitliche Lage der Signalflanken zwischen Impulsen und Impulspausen die Information darstellt. Ein einfacher Flankendetektor formt das Quellensignal in ein Kanalimpulssignal, das synchron zu jeder Signalflanke im Quellensignal einen kurzen nadelförmigen Kanalimpuls aufweist. Im optischen Empfänger ist ein 1:2-Frequenzteiler vorhanden, der das empfangene Kanalimpulssignal in die ursprüngliche Form des impulsförmigen Quellensignals zurückwandelt.

## Beschreibung

Die Erfindung betrifft eine Einrichtung zum kabellosen optischen Übertragen von Video- und/oder Audioinformation, wie Fernsehsendungen oder Videoaufzeichnungen, die ein optischer Sender frei in den umgebenden Raum sendet und die ein oder mehrere Fotoempfänger empfangen. Der Sender wandelt ein elektrisches Signal mit Video- und/oder Audioinformation in eine Signalstrahlung, die vorzugsweise im IR-Wellenbereich liegt. Das elektrische Signal kann z.B. ein HF-Empfangsteil für terristisches oder Satellitenfernsehen, ein Videorecorder, ein Audio- und/oder Videoplattenspieler oder eine Videokamera liefern. Im Fotoempfänger wandelt ein optischer Sensor die Signalstrahlung in die senderseitige elektrische Signalform zurück und ist vorzugsweise mit einem Wiedergabeteil für Bild und/oder Ton verbunden oder in diesem enthalten. Wiedergabeteile sind beispielsweise flache Bilddisplays, Videobildprojektoren oder Audioanlagen, die räumlich getrennt vom Bildwiedergabeteil angeordnet sind.
Auch ein herkömmliches Fernsehgerät oder eine Set-Top-Box können mit einem Fotoempfänger verbunden sein.

Die Entwicklung der Fernsehtechnik führt einerseits zu Verbesserungen in der Wiedergabe von Bild und Ton, um der Wiedergabequalität von Kinodarbietungen mit einer größeren Bildfläche und mehrkanaliger Audiowiedergabe möglichst nahezukommen. Andererseits werden Fernsehgeräte mit Geräten anderer Medien kombiniert, wie z.B. mit einem PC, einem Telefonnetz und einem Bildplattenspieler, beispielsweise für CD-ROM, CD-i und Video-CD, die nachfolgend als Bild-CD bezeichnet werden.
Dieses erfordert neuartige Bild- und Tonwiedergabeteile, beispielsweise flache Bilddisplays, die vorteilhaft getrennt von den übrigen Geräten angeordnet werden.

Die Vorteile eines flachen, an eine Wand anhängbaren Bilddisplays sind kaum nutzbar, wenn dieses Display kompakt mit einem herkömmlichen Fernsehempfangsteil zu einer Einheit ausgebildet ist, an der eine Vielzahl von Kabeln angeschlossen ist.

Ein weiterer Aspekt ist, daß Bildplattenspieler grundsätzlich zum Abspielen verschiedener CD-Typen ausgelegt sind und Wiedergabesignale sowohl für den Bildschirm eines Fernsehgerätes als auch für eine Audioanlage bereitstellen. Zum Übertragen der Video- und Toninformation zwischen diesen Geräten sind kabellose Signalverbindungen wünschenswert.

Ein Verfahren und eine Vorrichtung zum kabellosen optischen Übertragen von Audioinformation in Form von digitalen Audiodaten zu einem drahtlosen Kopfhörer mittels IR-Strahlung ist beispielsweise aus der Druckschrift DE-C2-43 28 252 bekannt. Die Signalquelle ist eine digitale Audioquelle wie ein CD-Player, DAT-Recorder oder ein DSR-Tuner.
Die Audiodaten sind Abtastwerte von Stereo-Tonsignalen mit je 16 Bit Wortlänge und entsprechen der beim Aufzeichnen benutzten digitalen Quellenkodierung. Vor dem Übertragen mit der IR-Strahlung wandelt ein Kodierer die Audiodaten in ein serielles kanalkodiertes Datensignal.
Dem Datenstrom werden zum Synchronisieren des Empfängers und zur Fehlerreduktion zusätzliche Bits und Datenworte zugefügt. Damit ist eine Datenübertragungsrate von etwa 2 MBit/s erforderlich.
Die Audiodaten werden über eine serielle digitale Audioschnittstelle entnommen, diese entspricht dem Interface Standard (DIN EN 60958, IEC 958). Somit stehen die Abtastwerte in Form eines Biphase-Mark-Codes (BM-Code) zur Verfügung. Dieses bedingt vor dem Umwandeln in das kanalkodierte Datensignal zunächst ein weiteres Dekodieren, das den Schaltungsaufwand erhöht.
Von Nachteil ist, daß das zusätzlich eingeführte Kodieren und Dekodieren zum Anpassen an die Eigenschaften eines IR-Kanals sowohl senderseitig als auch empfängerseitig den Aufwand an zusätzlichen Schaltungsmitteln beträchtlich erhöht, ohne daß dadurch eine bessere Übertragungsgüte erzielt wird.
Außerdem ist nachteilig, daß senderseitig eine beachtliche Menge an elektrischer Betriebsenergie benötigt wird, um eine ausreichende Strahlungsmenge für eine zuverlässige Übertragung zu erzeugen.

Aus der Druckschrift US-A-5 053 882 ist die Übertragung eines zusammengesetzten FM-Signals mit Video- und Audioinformation bekannt, bei der ein analoger Laser-Video-Player über ein Glasfaserkabel mit einem Fotoempfänger verbunden ist. Im Laser-Video-Player wird das Abtastersignal unter Umgehung eines, üblicherweise benutzten FM-Demodulators mit einer Laserdiode in eine IR-Strahlung umgewandelt, welche in der Signalform dem aufgezeichneten Signal auf der Video-CD gleicht. Mit Hilfe von Filtern und FM-Demodulatoren werden empfängerseitig das Videosignal und die Audiosignale aus dem übertragenen Wiedergabesignal regeneriert. Dafür werden vorteilhaft die vom Laser-Video-Player bekannten Schaltungsmittel verwendet. Dieses reduziert den Aufwand zum Anpassen des FM-Signals an das Glasfaserkabel erheblich.
Die Druckschrift offenbart jedoch keine Möglichkeit zum kabellosen Übertragen eines Fernsehsignals zu räumlich von einander getrennten Fotoempfängern.

Herkömmliche Lumineszenzdioden (IRED) sind im Vergleich mit Laserdioden preiswert und geben über einem breiten Winkel IR-Strahlung ab. Dieses ist für die vorgesehene Anwendung besonders günstig. Nachteilig ist jedoch, daß nur spezielle Diodentypen mit Frequenzen bis über 10 MHz modulierbar sind, wobei diese infolge des Amplituden-Frequenzgangs bei hohen Frequenzen nur eine geringe Strahlungsmenge generieren.
Ein weiteres Problem bilden Abschattungen durch Personen oder Teile der Raumeinrichtung sowie unmoduliertes und niederfrequentes Umgebungslicht, welches der Übertragungsraum üblicherweise enthält und der Signalstrahlung parasitär überlagert. Beide bewirken, daß empfängerseitig nur eine kleine Strahlungsmenge zur Verfügung steht, die infolge des Umgebungslichtes insbesondere bei einem großen Signal-Frequenz-Bereich schwierig auszuwerten ist, da dafür steile Filter und Entzerrer erforderlich sind. Bekannte Einrichtungen betreiben deshalb zum Steigern der Strahlungsausbeute eine Vielzahl von Lumineszensdioden gleichzeitig.
Dieses stößt jedoch mit zunehmender Modulationsfrequenz wegen der frequenzabhängigen Eigenimpedanz der Dioden auf Grenzen.

Es ist deshalb Aufgabe der Erfindung, Mittel zum Erhöhen der Bandbreite einer kabellosen optischen Übertragseinrichtungen und zum Vereinfachen der Signalaufbereitung aufzuzeigen, um auch Fernsehsendungen oder Videoaufzeichnungen mit geringem zusätzlichen Aufwand zum Anpassen an den optischen Übertragungskanal und mit wenigen Lumineszenzdioden zuverlässig bei den in üblichen Wohnräumen vorhandenen Umgebungslicht übertragen zu können. Der optische Sender soll möglichst weitwinklig strahlen, so daß die Signalstrahlung gleichzeitig von mehreren räumlich getrennt angeordneten Fotoempfängern auswertbar ist.

Die Lösung der Aufgabe legt zumindest zum Übertragen des oberen Frequenzspektrums der Video- und/oder Audioinformation ein pulsförmiges Quellensignal zugrunde, bei dem die zeitliche Lage der Signalflanken zwischen Pulsen und Pulspausen die Information darstellt. Ein einfacher Flankendetektor formt das Quellensignal in ein puls-abstands-moduliertes Kanalimpulssignal, das synchron zu jeder Signalflanke im Quellensignal, d.h. jedem L/H- und jedem H/L-Wechsel einen kurzen nadelförmigen Kanalimpuls aufweist. Die verfügbare Energiemenge wird damit ohne Verlust an Information auf kurze aber energiereiche Strahlungsimpulse mit einem großen Verhältnis von Periodendauer zu Pulsdauer konzentriert und die emittierte Strahlung vergrößert.
Das pulsförmige Quellensignal liefert beispielsweise ein Wandler eines Videoplattenspielers als EFM-Signal oder es kann mit einfachen Mitteln aus dem frequenzmodulierten Wiedergabesignal eines Videorecorders gewonnen werden. Dabei wird ausgenutzt, daß die Signalprozessoren der Abspielgeräte zum Regenerieren des Wiedergabesignals keine Information darüber benötigen, wann ein Puls und wann eine Pulspause im Quellensignal enthalten ist. Lediglich die zeitliche Lage der Wechsel von einem Zustand der Aufzeichnungsspur zum anderen dient zum Erkennen der Information. Diese Wechsel können mit dem puls-abstands-modulierten Signal ohne Verlust von Information anstelle des Quellensignals übertragen werden. Das hat den Vorteil, daß die Lumineszenzdioden gegenüber bekannten Lösungen mit einem vielfach höheren Signalspitzenstrom betrieben werden können, womit sich die momentane Strahlstärke ebenfalls vervielfacht.
Auf diese Weise sind einerseits Lumineszenzdioden mit kleiner aktiver Chipfläche verwendbar, die wegen geringer Eigenkapazitäten einen guten Wirkungsgrad bei den benötigten Modulationsfrequenzen aufweisen.
Andererseits kann der optische Sender im Vergleich zum Stand der Technik mit gleicher zugeführter mittlerer Energiemenge eine erheblich größere Pulsleistung bereitstellen. Auf diese Weise kann der Fotoempfänger das optische Signal besser erkennen und sogar auf indirektem Wege empfangen.
Im Fotoempfänger ist ein 1:2-Frequenzteiler vorhanden, der das empfangene Kanalimpulssignal in das ursprüngliche pulsförmige Quellensignal wandelt.
Im Gegensatz zu der aus der Druckschrift DE-43 28 252 bekannten Lösungen benötigt die Lösung gemäß der Erfindung empfängerseitig keinen für den optischen Übertragungskanal spezifischen Signalprozessor. An dessen Stelle wird ein für die Art der Signalquelle bekannter Signalprozessor benutzt. D.h., dieser Dekoder bzw. Demodulator mit dem entsprechenden Fehlerkorrekturteil ist eine vom einem Bildplattenspieler oder Videorecorder bekannte Baugruppe. Dieses hat den Vorteil, daß bei einem geringen Mehraufwand an Schaltungsmitteln der optische Übertragungskanal in die Fehlerkorrektur des Aufzeichnungsmediums einbezogen wird und daß die Baugruppe in Massenfertigung besonders preiswert realisierbar ist.

Die Erfindung soll nachstehend an Hand von Ausführungsbeispielen erläutert werden. Die zugehörigen Zeichnungen zeigen:
- FIG. 1:: eine erste Ausführungsform der Erfindung mit einem CD-Player als Signalquelle,
- FIG. 2:: Signalverläufe zu ausgewählten Schritten der Signalaufbereitung in der Ausführungsform nach Fig. 1,
- FIG. 3:: eine Schaltung eines Flankendetektors und
- FIG. 4:: eine zweite Ausführungsform der Erfindung mit einem Videorecorder als Signalquelle.

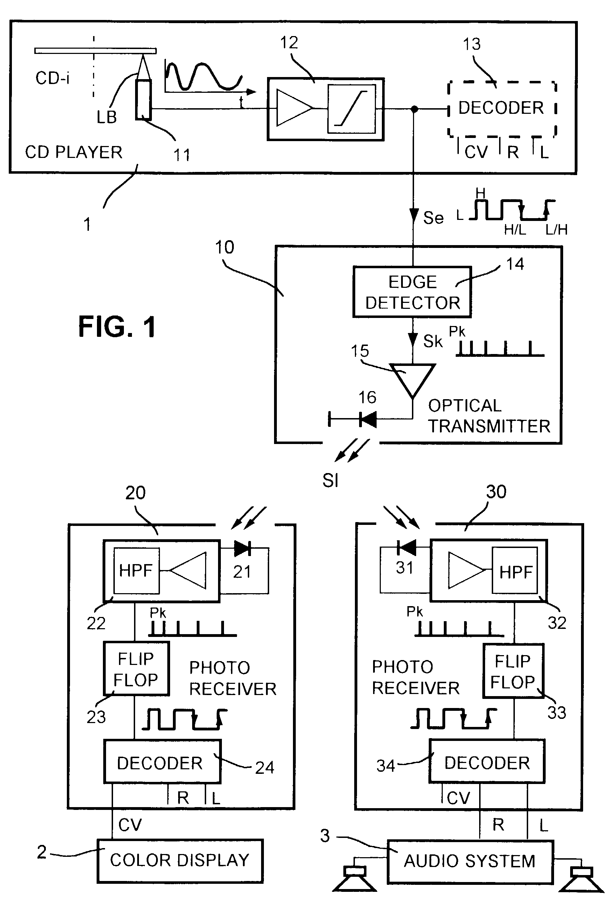

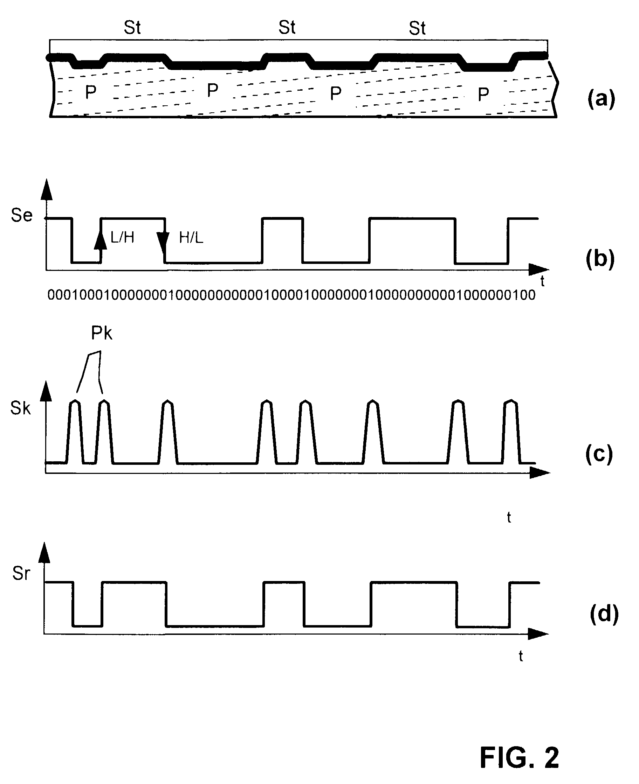

Wie FIG. 1 zeigt, ist in einer ersten Ausführungsform der Erfindung ein CD-Player 1 für Audio-CD und CD-i mit einem optischen Sender 10 verbunden. Der CD-Player 1 liefert ein kodiertes Quellensignal Se, welches bei einer CD-i in der Regel Daten eines Videosignals CV und zweier Audiosignale R und L und bei einer Audio-CD der zwei Audiosignale R und L enthält. Die Aufzeichnungsart ist für beide CD-Typen grundsätzlich gleich. Eine CD-i beispielsweise enthält das Videosignal CV, die Audiosignale R und L, Sub-Code-Daten und die Synchrondaten in einer einzigen Pit-Spur PL. Vor dem Fressen werden das Videosignal CV und die Audiosignalen R und L kodiert und datenkomprimiert und in Multiplexern mit Sub-Code-Daten für die Fehlererkennung und Fehlerkorrektur und mit Synchrondaten zu einem seriellen Datenstrom vereinigt. Dieser wird in einem bekannten EFM-Prozessor (EFM: eight-to-fourteen modulation) in das Quellensignal Se umgesetzt und, wie FIG. 2 (a) zeigt, auf der CD mit Pits P und Stegen St aufgezeichnet. Die Information ist ausschließlich durch die örtlichen Abstände der Pit-Steg- bzw. Steg-Pit- Übergänge gekennzeichnet, so daß, selbst wenn Pits P und Stege St vertauscht sein würden, beim Abspielen die Aufzeichnung richtig dekodiert wird.

Im CD-Player 1 liest ein optoelektronischer Wandler 11 die Pit-Spur mit einem Laserstrahl LB und regeneriert das als EFM aufgezeichnete Quellensignal, welches, abgesehen von Schwankungen in der Amplitude und Verformungen der Signalflanken, dem ursprünglichen entspricht. Ein Kopfverstärker 12 gewinnt einerseits aus diesem Signal ein Steuersignal für eine nicht dargestellte Wandlersteuerung und bereitet andererseits durch Verstärken und Begrenzen das Dekodieren vor. Am Ausgang des Kopfverstärkers 12 liegt das in FIG.2 (b) gezeigte Quellensignal Se mit steilen Signalflanken. Die soweit dargestellte Schaltung ist von herkömmlichen CD-Playern bekannt. Gewöhnlich folgt dem Kopfverstärker 12 ein Dekoder 13, der in FIG. 1 gestrichelt dargestellt ist und u.a. Mittel zum Dekodieren, Synchronisieren, zur Fehlerkorrektur und Analog/Digital-Wandlung enthält. Der Dekoder 13 ist jedoch bei der vorliegenden Lösung zum Rückgewinnen der Video- und oder Audioinformation nicht erforderlich, sondern regeneriert lediglich aus den Sub-Code- und Synchrondaten Signale zum Steuern der Laufwerk- und Wandlerbewegungen des CD-Players, wie z.B. für den Suchlauf.
Am Ausgang des Kopfverstärkers 12 ist der optische Sender 10 angeschlossen. Dieser enthält einen Flankendetektor 14, der das Quellensignal Se in ein Kanalimpulssignal Sk formt. Wie Fig 2 (c) zeigt, generiert der Flankendetektor 14 synchron zu jeder Signalflanke des Quellensignals Se unabhängig von deren Richtung einen nadelförmigen Kanalimpuls Pk, so daß das Kanalimpulssignal Sk gegenüber dem Quellensignal Se die doppelte Pulszahl enthält. Das Verhältnis von Periodendauer zur Pulsdauer ist beim Kanalimpulssignal Sk gegenüber dem Quellensignal Se um ein Vielfaches größer. Ein Treiberverstärker 15 steuert eine Lumineszenzdiode 16 mit dem verstärkten Kanalimpulssignal Sk an. Diese sendet eine IR-Strahlung Sl, die mit dem Kanalimpulssignal Sk moduliert ist, frei in den umgebenden Raum ab. Ein erster Teil der IR-Strahlung Sl gelangt auf direktem Wege oder durch Reflexion, z.B. an den Wänden oder der Decke des Wiedergaberaums, zu einem Fotoempfänger 20, der mit einem Bildwiedergabeteil in Form eines Color Displays 2 verbunden ist, während ein zweiter Teil zu einem Fotoempfänger 30 gelangt, der mit einer Audioanlage 3 verbunden ist.

Da bei der erfindungsgemäßen Lösung die ausgesandte IR-Strahlung Sl eine hohe Intensität aufweist, ist es nicht erforderlich, daß zwischen dem Sender 10 und den Fotoempfängern 20 und 30 optische Sicht besteht. In der Praxis konnte selbst das gegen einen textilen Fußbodenbelag gerichtete IR-Strahlung Sl als Reflexion fehlerfrei ausgewertet werden.

Die Fotoempfänger 20 und 30 enthalten Sensoren 21, 31. Diese wandeln die empfangene IR-Strahlung Sl in ein elektrisches Signal zurück, das dem Kanalimpulssignal Sk entspricht. Selektive Eingangsverstärker 22, 32 mit einem Bandpaß- oder Hochpaßverhalten trennen das hochfrequente Kanalimpulssignal Sk von der Störspannung, welche die Sensoren 21, 31 infolge von niederfrequentem und unmoduliertem Umgebungslicht liefern.
Das empfangene Kanalimpulssignal wird jeweils mit Hilfe eines Flip-Flops 23, 33 in die Form des senderseitigen Quellensignals Se rückgeführt. Die Flip-Flops 23, 33 teilen das Kanalimpulssignal um den Faktor 2, so daß ein in FIG. 2 (d) dargestelltes Empfangssignal Sr entsteht, das dem ursprünglichen digital kodierten Quellensignal Se entspricht.
Die Flip-Flops 23, 33 sind ausgangsseitig jeweils mit einem von CD-Playern bekannten digitalen Dekoder 24, 34 verbunden, die zum Dekoder 13 baugleich sind und die genannten Mittel zur Signalaufbereitung enthalten, so daß jeweils das Videosignal CV und die Audiosignale R und L reproduziert werden. Da derartige Dekoder in großen Stückzahlen für CD-Player gefertigt werden, sind diese preiswert erhältlich. Die Baugruppe kann jedoch auch an das nachgeschaltete Wiedergabeteil angepaßt werden. So können z.B. ein RGB-Ausgang oder ein Surround-Prozessor hinzugefügt werden.

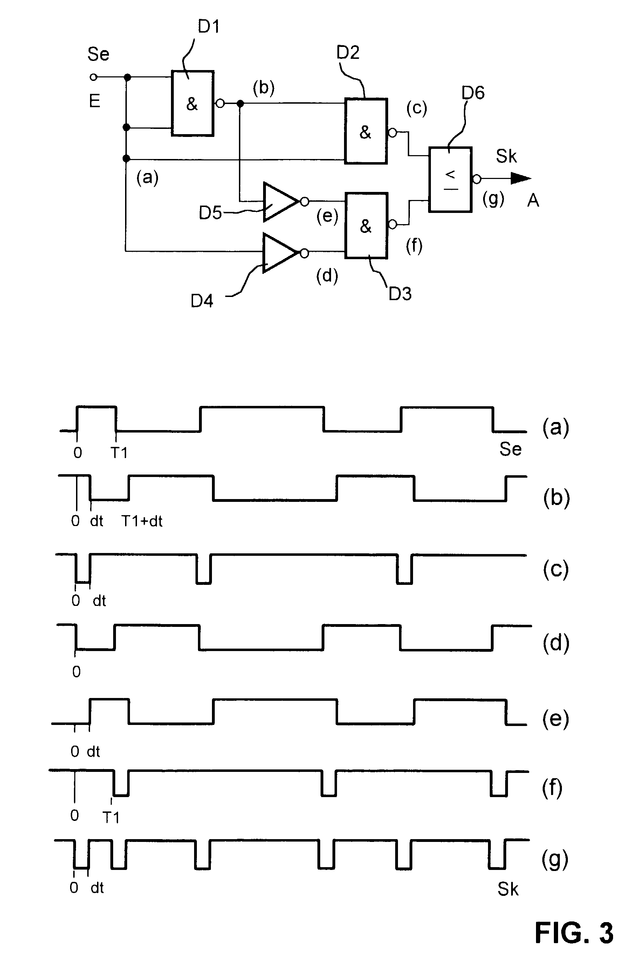

FIG. 3 zeigt ein Beispiel einer Schaltung für den Flankendetektor 14.
Der Flankendetektor weist einen Dateneingang E auf, an dem das in Kurve (a) gezeigte digital dekodierte Quellensignal Se liegt. Dieses wird, wie Kurve (b) zeigt, mit Hilfe einer Verzögerungsschaltung D1, um eine Dauer dt in der Größenordnung von etwa 100 ns verzögert und invertiert. Ein als Inverter geschaltetes NAND-Gatter D1 realisiert die Verzögerung. Ein erster von zwei Eingängen eines zweiten NAND-Gatters D2 ist direkt mit dem Dateneingang E verbunden, während der andere mit dem Ausgang der Verzögerungsschaltung D1 verbunden ist. Wie die Kurven (a) und (b) von FIG. 3 zeigen, liegen immer dann beide Eingänge des NAND-Gatters D2 für die Dauer dt auf H-Potential, wenn das Quellensignal Se vom L nach H wechselt. Wie FIG. 3, Kurve (c) zeigt, wechselt das Ausgangssignal vom NAND-Gatter D2 nach jedem L/H-Wechsel des Quellensignals Se für die Dauer dt von H nach L.
Ein erster Eingang eines weiteren NAND-Gatters D3 mit zwei Eingängen ist über einen zweiten Inverter D4 mit dem Dateneingang E verbunden, während der andere ebenfalls über einen Inverter D5 mit dem Ausgang der Verzögerungsschaltung D1 verbunden ist. Wie die Kurven (d) und (e) zeigen, liegen beim NAND-Gatters D3 im Gegensatz zum NAND-Gatter D2 immer dann beide Eingänge für die Dauer dt auf H, wenn das Quellensignal Se von H nach L wechselt. Am Ausgang vom NAND-Gatter D3 liegt somit ein Pulssignal, das nach jedem H/L-Wechsel des Quellensignals Se für die Dauer dt nach L wechselt und für die übrige Zeit auf H liegt. Die Ausgänge der beiden NAND-Gatter D2, D3 sind jeweils mit den Eingängen eines NOR-Gatters D6 verbunden, welches am Ausgang A das in Kurve (g) gezeigte gewünschte Kanalimpulssignal Sk hervorbringt.

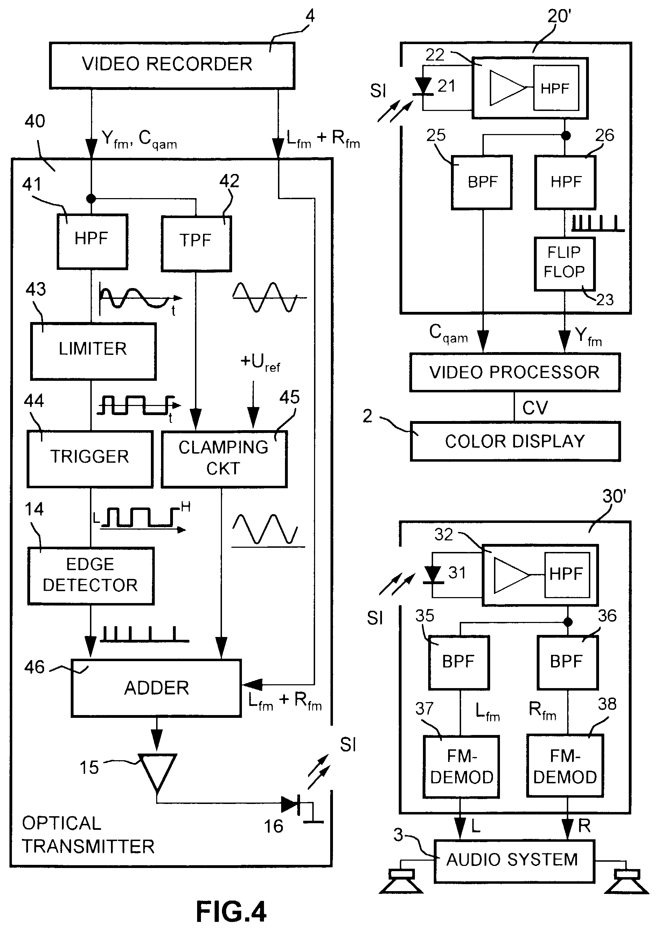

Eine weitere Ausführungsform der Erfindung zeigt FIG. 4. Ein optischer Sender 40 generiert ein Kanalimpulssignal Sk, das zwei analoge Quellensignale enthält, welche die Wiedergabesignale eines herkömmlichen Videorecorders 4 mit einem HiFi-Tonteil sind. Ein nicht dargestellter Videokopf-Verstärker liefert im Wiedergabebetrieb ein erstes analoges Quellensignal in Form eines zusammengesetzten Videosignals. Dieses enthält ein FM-Luminanzsignal Y_{fm} mit einem Frequenzhub von 3,8 bis 4,8 MHz sowie ein Chrominanzsignal C_{qam}, das unterhalb des FM-Luminanzsignals Y_{fm} liegt. Darüber hinaus liefert der Videokopf-Verstärker ein zweites analoges Quellensignal, das als Frequenz-Multiplex-Signal die Audiosignale R_{fm} und L_{fm} trägt, und im energiearmen Bereich des unteren Seitenbandes des FM-Luminanzsignals Y_{fm} liegt. Das zusammengesetzte Videosignal wird mit Hilfe eines Hochpaßfilters 41 und eines Tiefpaßfilters 42 in je einen Zweig für das FM-Luminanzsignal Y_{fm} und das Chrominanzsignal C_{qam} aufgeteilt. Das FM-Luminanzsignal Y_{fm} durchläuft eine Begrenzerschaltung 43 und wird zunächst in eine symmetrische Rechteckwelle überführt, um von einer Triggerschaltung 44 in ein Pulssignal überführt zu werden, das nur noch die Pegel H und L aufweist.
Ein aus FIG. 1 bekannter Flankendetektors 14, formt das impulsförmige Luminanzsignal in ein puls-abstands-moduliertes Signal in der Form entsprechend der FIG. 2 (c) um. Das Potential des Chrominanzsignals C_{qam} wird in einer Klemmschaltung 45 verschoben, so daß dieses nur zwischen der Nullinie und einem Maximalwert schwingt. Eine Summierschaltung 46 überlagert das impulsförmige Luminanzsignal Y_{fm} vom Ausgang des Flankendetektors 14 und das Frequenz-Multiplex-Signal dem Chrominanzsignal C_{qam} vom Ausgang der Klemmschaltung 45. Als Ergebnis entsteht ein Signalgemisch in Form einer pulsierenden Gleichspannung, welches im Unterschied zur Aufzeichnung eines Videorecorders einerseits das Luminanzsignal Y_{fm} mit energiereiche Impulse und einem geringen Verhältis von Impulsdauer zu Periodendauer und andererseits sowohl Chrominanz- als auch Audioinformation enthält.
Wie in der Ausführungsform nach FIG. 1 liegt am Ausgang des Flankendetektors 14 ein Treiberverstärker 15 zum Ansteuern einer Lumineszenzdiode 16 mit dem Signalgemisch. Dabei wird IR-Strahlung, die mit dem FM-Luminanzsignal Y_{fm}, dem Chrominanzsignal und den beiden Audiosignalen moduliert ist, frei in den umgebenden Raum abgestrahlt.
Empfängerseitig wandeln Sensoren 21, 31 den empfangenen Anteil der IR-Strahlung in ein elektrisches Signal zurück, das dem senderseitigen Signalgemisch entspricht. Selektive Eingangsverstärker 22, 32 mit einem Hochpaßverhalten trennen nach dem optoelektronischen Wandeln das hochfrequente Spektrum des Signalgemischs von der Störspannung, welche die Sensoren infolge von niederfrequentem und unmoduliertem Umgebungslicht liefern. Im Gegensatz zur Ausführungsform nach FIG. 1 ist an den Ausgang des Eingangsverstärkers 22 im Fotoempfänger 20', ein Bandpaßfilter 25 zum Selektieren des Chrominanzsignals C_{qam} und ein Hochpaßfilter 26 zum Selektieren des Luminanzsignals angeschlossen. Das Flip-Flop 23 halbiert die Impulszahl des impulsförmigen Luminanzsignals, wie in der Ausführungsform entsprechend von FIG. 1. Die an den Ausgängen des Bandpaßfilters 25 und des Flip-Flops 23 liegenden Signale Y_{fm} und C_{qam} entsprechen den Signalen, welche der Kopfverstärker eines herkömmlichen Videorecorders beim Abspielen liefert. Die weitere Signalaufbereitung für das Bildwiedergabeteil 2 erfolgt vorteilhaft mit einem von Videorecordern bekannten Videoprozessor, der infolge von Massenfertigung preiswert erhältlich ist.

Der Fotoempfänger 30' weist Bandpaßfilter 35 und 36 zum Separieren sowie Frequenzdemodulatoren 37 und 38 zum Demodulieren der FM-Audiosignale L_{fm} und R_{fm} auf. Diese enthalten gewöhnlich Audioprozessoren für HiFi-Videorecorder und sind somit ebenfalls preisgünstig als Massenprodukt erhältlich.
Die vom Videorecorder bekannten Signalprozessoren enthalten Mittel zur Korrektur von Übertragungsfehlern, wie Frequenzgang- und Laufzeitfehler.
Damit ist auch bei dieser Ausführungsform der Erfindung die optische Übertragung in die Signalregenerierung einbezogen.

Der Gegenstand der Erfindung ist nicht auf die dargestellten zwei Beispiele begrenzt, sondern kann auch für andere Signalquellen angewendet werden. Beispielsweise kann das FBAS-Signal eines Fernsehempfängers mit einem von Videorecordern bekannten Videoprozessor nach dem bekannten Farbe-darunter-Verfahren in ein FM-Luminanzsignal Y_{fm} und ein quadratur-amplituden-moduliertes Chrominanzsignal C_{qam} überführt werden. Die Audiosignale L und R werden mit einem von herkömmlichen Videorecordern ebenfalls bekannten Audioprozessor frequenzmoduliert und mit dem in FIG. 4 dargestellten Sender 40 übertragen.
Da beim optischen Übertragen weder das vom Magnetband bekannte Übersprechen zwischen benachbarten Schrägspuren auftritt, noch eine Begrenzung der Übertragungsbandbreite durch das Bandmaterial erfolgt, ist es vorteilhaft, von einigen Maßnahmen und Parametern, die im VHS-Standard vorgesehen sind, abzuweichen. So ist es für eine ausreichende Bildqualität erforderlich, das Frequenzband zum Übertragen des FM-Luminanzsignals Y_{fm}, wie beim S-VHS-Standard, in einen höheren Frequenzbereich zu verschieben. Aufgrund des fehlenden Übersprechens kann auf die bei Videorecordern übliche Phasenrotation für den Farbträger ebenfalls verzichtet werden. Somit entfällt das Kammfilter.

Wie oben ausgeführt ist bei Video-Aufzeichnungs-Geräten, die Information jeweils in einer vom Aufzeichnungsträger abhängigen Signalform aufgezeichnet. Dieses bedingt zum Regenerieren des Wiedergabesignals verschiedene Signalprozessoren, z.B. bei der Bild-CD den beschriebenen Dekoder 13 und beim Videoband den erwähnten Videoprozessor zum Demodulieren. Deshalb sind entsprechend einer besonderen Ausführungsform der Erfindung, den Fotoempfängern 20, 30 verschiedene Dekoder und Demodulatoren nachgeschaltet. Diese setzt eine Auswahleinrichtung, die selbstätig die Art des aktiven Videoquelle an der empfangenen Signalstrahlung IR-erkennt, der Signalform entsprechend in Betrieb.

Darüber hinaus ist der Gegenstand der Erfindung auch vorteilhaft nur zum Übertragen von Audiosignalen anwendbar.

## Patentansprüche

1. Einrichtung zum kabellosen optischen Übertragen von Video- und/oder Audioinformation
mit einer Signalquelle (1, 4), die mindestens ein impulsförmiges Quellensignal (Se) liefert, welches die Video- und/oder Audioinformation durch die zeitliche Lage von Signalflanken (H/L, L/H) zwischen Impulsen und Impulspausen kennzeichnet und welches ein für die Art der Signalquelle (1, 4) spezifischer Signalprozessor (24, 34, 37, 38) in ein Wiedergabesignal (CV, L, R) für ein Bild- und/oder Tonwiedergabeteil (2, 3) wandelt,
mit einem Quellensignalwandler, der das Quellensignal (Se) in ein Kanalimpulssignal (Sk) wandelt,
mit mindestens eine Lumineszenzdiode (16), die eine, mindestens mit dem Kanalimpulssignal (Sk) modulierte Signalstrahlung (Sl) frei in den umgebenden Raum abstrahlt,
und mit mindestens einem Fotoempfänger (20, 30), der Mittel (23, 24, 33, 34, 37, 38) zum Rückgewinnen der in der empfangenen Signalstrahlung (Sl) enthaltenen Video- und/oder Audioinformation, aufweist
**gekennzeichnet dadurch,**
daß der Quellensignalwandler ein Flankendetektor (14) ist, der ein Kanalimpulssignal (Sk) erzeugt, das bei jeder Signalflanke (H/L, L/H) des Quellensignals (Se) einen gegenüber der Dauer der Impulse und der Impulspausen des Quellensignals (Se) um ein Vielfaches kürzeren Kanalimpuls (Pk) aufweist,
und daß die Mittel zum Rückgewinnen der Video- und/oder Audioinformation mindestens in einem Fotoempfänger (20, 30) ein 1:2-Frequenzteiler (23, 33) und der, von der Art der Signalquelle (1, 4) bekannte spezifische Signalprozessor (24 34, 37, 38) sind.

2. Einrichtung nach Anspruch 1, gekennzeichnet dadurch, daß der optische Sender (10) mit einem CD-Player (1) verbunden ist, der einen Kopfverstärker (12) enthält, an dem die Video- und/oder Audioinformation gemeinsam in Form eines digital kodierten Quellensignals (Se) zum Wandeln in das Kanalimpulssignal (Sk) und zum Modulieren der Signalstrahlung (Sl) zur Verfügung steht und daß die Mittel (24, 34, 37, 38) zum Rückgewinnen der Video- und/oder Audioinformation jedes Fotoempfängers (20, 30) einen vom CD-Plattenspieler-System bekannten Signalprozessor (13, 24, 34) zum Dekodieren der Video- und/oder Audioinformation enthalten.

3. Einrichtung nach Anspruch 1, gekennzeichnet dadurch, daß das impulsförmige Quellensignal (Se) der Signalquelle (1) an einem an sich bekannten Digitalausgang für eine Signalübertragung im Biphase-marke-Code entnommen wird.

4. Einrichtung nach Anspruch 1, gekennzeichnet dadurch, daß die Signalquelle ein Videorecorder (4) ist mit einer Kopfverstärkereinheit, die ein erstes aus einem Fm-Luminanzsignal (Y_{fm}) und einem Chrominanzsignal zusammengesetztes analoges Quellensignal und ein zweites aus zwei FM-Audiosignalen (L_{fm}, R_{fm}) zusammengesetztes analoges Quellensignal bereitstellt, und daß die Signalstrahlung (Sl) mindestens mit dem in ein Kanalimpulssignal (Sk) gewandeltes FM-Luminanzsignal (Y_{fm}) moduliert ist.

5. Einrichtung nach Anspruch 4, gekennzeichnet dadurch, daß die Signalstrahlung mit einem unterhalb des Frequenzbands vom Fm-Luminanzsignal (Y_{fm}) liegenden Chrominanzsignal moduliert ist, dem sowohl die FM-Audiosignale (L_{fm}, R_{fm}) als auch das in ein Kanalimpulssignal (Sk) gewandelte FM-Luminanzsignal (Y_{fm}) linear überlagert sind.

6. Einrichtung nach Anspruch 1, gekennzeichnet dadurch, daß der Fotoempfänger Dekoder für verschiedene Signalformen und Erkennungsmittel zum Erkennen der jeweils übertragenen Signalform aufweist und daß die Erkennungsmittel den der übertragenen Signalform entsprechenden Dekoder aktivieren.
